(19) Europäisches Patentamt / European Patent Office / Office européen des brevets

(11) **EP 2 525 934 B1**

(12) **FASCICULE DE BREVET EUROPEEN**

(45) Date de publication et mention de la délivrance du brevet:
**19.11.2014 Bulletin 2014/47**

(21) Numéro de dépôt: **11703044.5**

(22) Date de dépôt: **19.01.2011**

(51) Int Cl.:
**B23C 5/06** *(2006.01)*    **B23C 5/20** *(2006.01)*

(86) Numéro de dépôt international:
**PCT/IB2011/050232**

(87) Numéro de publication internationale:
**WO 2011/089552 (28.07.2011 Gazette 2011/30)**

(54) **PLAQUETTE DE COUPE AVEC ARÊTE GÉNÉRATRICE DE TEMOIN DE DÉPASSEMENT DE HAUTEUR DE DRESSAGE**

SCHNEIDEINSATZ MIT SCHNEIDKANTE FÜR DAS ANZEIGEN DER ÜBERSCHREITUNG DER PLANSENKENHÖHE

CUTTING INSERT HAVING A CUTTING EDGE GENERATING AN INDICATOR THAT THE END FACING HEIGHT HAS BEEN EXCEEDED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2010 FR 1050424**

(43) Date de publication de la demande:
**28.11.2012 Bulletin 2012/48**

(73) Titulaire: **Sandvik Tooling France
45100 Orléans (FR)**

(72) Inventeur: **FOUQUER, Richard
F-37540 Saint Cyr Sur Loire (FR)**

(74) Mandataire: **Hirsch & Associés
58, avenue Marceau
75008 Paris (FR)**

(56) Documents cités:
**EP-A1- 2 070 620    EP-B1- 1 736 266**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte au domaine des plaquettes de coupe, notamment celles utilisées pour l'usinage des métaux et alliages, en particulier en fraisage.

Le document EP 1 736 266 B1 divulgue une plaquette de coupe selon le préambule de la revendication 1. Le document EP 2 070 620 A1 divulgue une plaquette de coupe selon le préambule de la revendication 9.

Dans le domaine du fraisage, il est connu d'utiliser des plaquettes de coupe dites trigones, montées sur un porte-outil. Ces plaquettes de coupe trigones sont désignées par la lettre W dans la norme ISO 1832 :2004. Elles sont particulièrement adaptées pour réaliser des opérations de surfaçage-dressage. Pour mémoire, une opération de surfaçage-dressage consiste à réaliser un épaulement dans une pièce en usinant simultanément deux surfaces planes contiguës dans celle-ci lesquelles forment entre elles un angle de 90°, la surface dressée étant celle qui est parallèle à l'axe de rotation du porte-outil communément désignée par axe Z. Ces plaquettes de coupe trigones permettent aussi de réaliser des opérations de dressage pur ou de surfaçage pur.

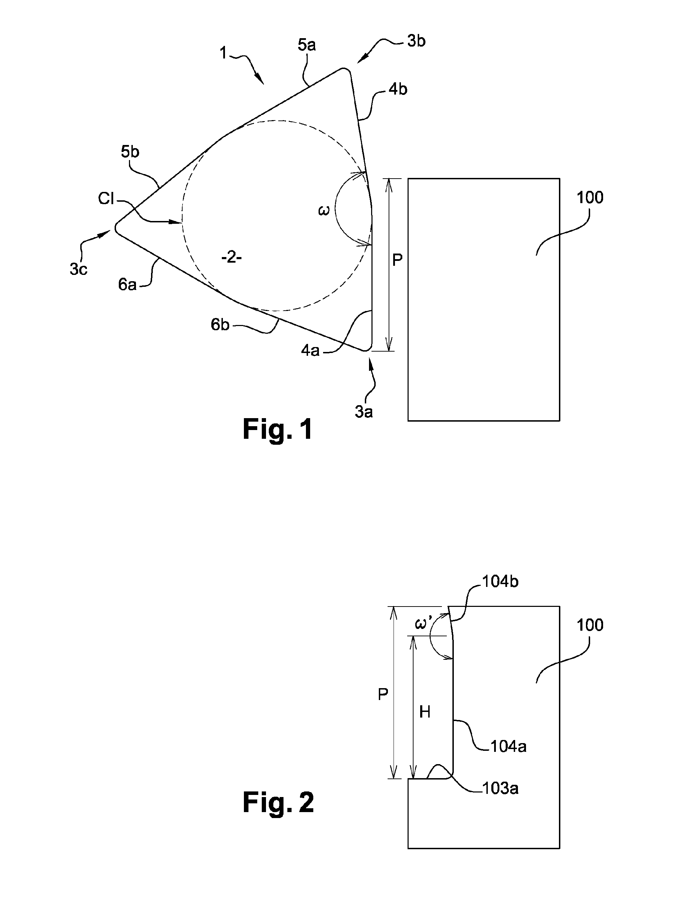

La figure 1 représente schématiquement une telle plaquette de coupe trigone, référencée 1, et une pièce 100 sur laquelle l'on souhaite réaliser un épaulement au moyen d'une opération de surfaçage-dressage réalisée à l'aide d'un porte-outil sur lequel sont montées plusieurs plaquettes de coupe 1.

La plaquette de coupe 1 a une face de coupe 2 présentant un profil globalement triangulaire définissant trois pointes de coupe 3a, 3b et 3c. Mais le profil de la face de coupe 2 est en réalité hexagonal non équiangle. En effet, chaque côté du profil triangulaire est subdivisé en deux arêtes de coupe formant entre elles, en vue de dessus tel que représentée à la figure 1, un angle ω qui est inférieur à 180°, mais généralement supérieur ou égal à 150°. Ces arêtes de coupes sont référencées 4a, 4b, 5a, 5b et 6a, 6b. Les pointes de coupe 3a, 3b et 3c et les arêtes de coupes 4a, 4b, 5a, 5b et 6a, 6b sont conformées pour permettre de réaliser des opérations de surfaçage-dressage lorsque des plaquettes de coupe 10 sont montées sur un porte-outil approprié.

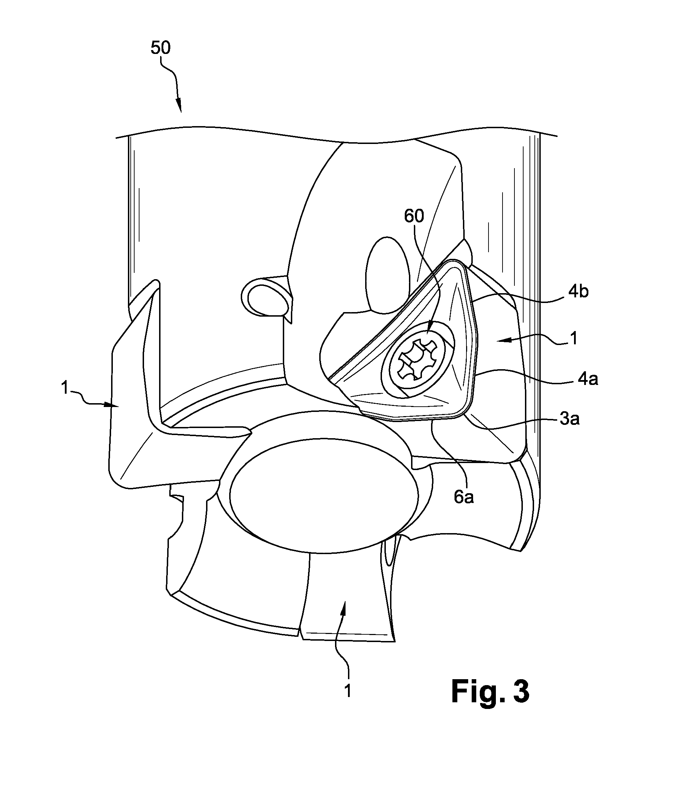

La figure 3 illustre une fraise comprenant un tel porte-outil, référencé 50, sur lequel sont montés trois plaquettes de coupe 1. La plaquette de coupe 1 présente éventuellement un trou traversant pour permettre sa fixation sur le porte-outil au moyen d'une vis 60. Lorsque la plaquette de coupe 1 est montée sur un porte-outil, une seule de ses pointes de coupe est active.

Un inconvénient des plaquettes de coupe trigones réside dans le risque que l'opérateur utilise une profondeur de passe d'usinage qui excède la hauteur de l'arête de coupe assurant le dressage. Cette situation est illustrée par la figure 2 qui représente la pièce 100 après réalisation d'un épaulement par surfaçage-dressage au moyen de la fraise de la figure 2. Pour la clarté de l'explication, on suppose que c'est la pointe de coupe 3a des plaquettes de coupe 1 qui était active et que c'est l'arête de coupe 4a qui assurait le dressage de la pièce 100 lors de l'opération de surfaçage-dressage. L'arête de coupe 4a a donc engendré une surface dressée 104a. La surface dressée 104a est perpendiculaire à la surface plane 103a engendrée par le surfaçage opéré par l'extrémité inférieure de la pointe de coupe 3a simultanément au dressage opéré par l'arête de coupe 4a. L'arête de coupe 4a était active sur toute sa longueur et il en résulte une hauteur maximale de dressage, notée H, pour la surface dressée 104a. Cependant, la profondeur de passe P dépassant la hauteur maximale de dressage H, l'arête de dressage adjacente 3b est venu également usiner la pièce 100. Celle-ci a engendré une surface 104b juste au-dessus de la surface dressée 104a. Les deux surfaces 104a et 104b forment entre elles un angle ω' qui est la conséquence de l'angle ω précité qui existe entre les arêtes de coupe 4a et 4b. Comme l'angle ω est inférieur à 180°, la surface 104b n'est pas perpendiculaire à la surface 103a, ce qui est contraire au résultat souhaité lors d'une opération de surfaçage-dressage. Mais du fait que l'angle ω est néanmoins relativement proche de 180°, cette différence d'angle est très peu visible pour l'opérateur qui peut donc ne pas se rendre compte de l'erreur. Ce risque est accru dans le cas des plaquettes de coupe 1 de petite taille, notamment lorsque le cercle inscrit CI à la face de coupe a un diamètre inférieur ou égal à 15 mm.

Ce problème existe plus généralement pour toute plaquette de coupe présentant deux arêtes de coupe consécutives qui engendrent lors de l'usinage deux surfaces correspondantes sur la pièce usinée lesquelles forment entre elles un angle inférieur à 180°, mais toutefois proche de 180° alors qu'il était souhaité n'avoir qu'une seule des deux arêtes qui soit active lors de l'opération d'usinage.

Par conséquent, l'invention vise à remédier à cet inconvénient, que ce soit dans le cas de plaquettes de coupe dites trigones ou dans le cas plus général évoqué juste précédemment.

A cette fin, la présente invention propose une plaquette de coupe, comprenant :

- une face de coupe ;
- trois pointes de coupe agencées chacune au bord de la face de coupe ;
- trois paires d'arêtes de coupe, chacune des paires étant formée par une première arête de coupe et une deuxième arête de coupe qui aboutissent à l'une respective des pointes de coupe ;

dans laquelle :

- la première arête de coupe de chacune des trois paires est agencée au bord de la face de coupe et d'une première face de dépouille correspondante ;
- la deuxième arête de coupe de chacune des trois paires est agencée au bord de la face de coupe et d'une deuxième face de dépouille correspondante ;

- chaque paire d'arête de coupes se déduit de chacune des autres paires d'arêtes de coupe par une rotation de 120° autour d'un même axe ;
- les trois pointes de coupe et les trois paires d'arêtes de coupe présentent une symétrie par rapport à chacun des plans bissecteurs des trois pointes de coupe ; et
- la première arête de coupe de chacune des paires est reliée à la deuxième arête de coupe d'une autre des paires par l'intermédiaire d'au moins une troisième arête de coupe, ladite au moins une troisième arête de coupe étant agencée au bord de la face de coupe et d'au moins une troisième face de dépouille correspondante, l'au moins une troisième arête de coupe et l'au moins une troisième face de dépouille correspondante formant une gorge entre la première face de dépouille de la première arête de coupe considérée et la deuxième face de dépouille de la deuxième arête de coupe considérée.

Du fait de cette géométrie, en cas de dépassement de la hauteur maximale d'usinage de la première ou deuxième arête de coupe qui est la seule sensée être active lors de l'usinage, ladite au moins une troisième arête de coupe a pour effet de générer une saillie sur la pièce usinée par rapport à la surface usinée par cette première ou deuxième arête de coupe. Cette saillie constitue ainsi un témoin visuel plus facilement visible par l'opérateur que la surface engendrée par erreur par la première ou deuxième arête de coupe qui se situe au-dessus de l'au moins une troisième arête de coupe.

L'invention est particulièrement avantageuse dans le cas des plaquettes de coupe de petite taille, notamment lorsque le diamètre du cercle inscrit au profil fictif de la face de coupe - vu suivant ledit axe - est inférieur ou égal à 15 mm, le profil fictif étant celui obtenu en omettant les troisièmes arêtes de coupe et en prolongeant fictivement les trois paires d'arêtes de coupe jusqu'à se qu'elles se joignent deux à deux. Autrement dit, cela revient au tracé du profil de la figure 1 et de son cercle CI sur la figure 1.

Suivant des modes de réalisation préférés, l'invention comprend une ou plusieurs des caractéristiques suivantes :

- chacune des pointes de coupe et l'une quelconque des première et deuxième arêtes de coupe aboutissant à la pointe de coupe considérée, sont adaptées pour réaliser en coopération un surfaçage-dressage, la pointe de coupe réalisant le surfaçage et la première ou deuxième arête de coupe réalisant le dressage ;
- les première et deuxième arêtes de coupe de chacune des paires d'arêtes de coupe se projettent orthogonalement sur un plan perpendiculaire audit axe en un segment rectiligne respectif ;

- le rapport suivant est observé pour l'une quelconque des première et deuxième arêtes de coupe :

$$hd \geq 0{,}6 \text{ x } h$$

et plus préférentiellement :

$$hd \geq 0{,}7 \text{ x } h$$

et/ou :

$$hd \leq 0{,}95 \text{ x } h$$

et plus préférentiellement :

$$hd \leq 0{,}9 \text{ x } h$$

avec :

- $h_d$ est la hauteur de l'arête de coupe considérée, en projection orthogonale sur un plan perpendiculaire audit axe,
- h : la hauteur du point d'intersection entre, d'une part, la droite fictive comprenant le segment rectiligne en lequel se projette orthogonalement l'arête de coupe considérée sur le plan perpendiculaire audit axe et, d'autre part, celui des plans bissecteurs croisant l'au moins une arête de coupe additionnelle contiguë à l'arête de coupe considérée,
  hd et h étant mesurée le long d'une droite parallèle au segment rectiligne en lequel se projette orthogonalement l'arête de coupe considérée sur le plan perpendiculaire audit axe depuis l'extrémité inférieure de la pointe de coupe à laquelle aboutit l'arête de coupe considérée ;

- le rapport suivant est observé pour l'une quelconque des première et deuxième arêtes de coupe :

$$p \geq 0{,}05 \text{ x } h$$

et/ou

$$p \leq 0{,}2 \text{ x } h$$

avec :

- h : définie comme précédemment, et
- p : la profondeur maximale du renfoncement défini par l'au moins une arête de coupe additionnelle en projection orthogonale sur un plan perpendiculaire audit axe et mesurée orthogonalement à partir d'une droite fictive comprenant le segment rectiligne en lequel se projette orthogonalement l'arête de coupe considérée sur le plan perpendiculaire audit axe ;

- la plaquette de coupe comprend une deuxième face de coupe symétrique à la première face de coupe par rapport à un plan perpendiculaire audit axe.

Selon un autre aspect, la présente invention propose une plaquette de coupe, comprenant :

- une face de coupe ;
- une pointe de coupe agencée au bord de la face de coupe ;
- une première arête de coupe agencée au bord de la face de coupe et d'une première face de dépouille, la première arête de coupe aboutissant à la pointe de coupe ;
- une deuxième arête de coupe et au moins une troisième arête de coupe ;

    dans laquelle la pointe de coupe et la première arête de coupe sont adaptées pour réaliser en coopération un surfaçage-dressage, la pointe de coupe générant une première surface plane par surfaçage et la première arête de coupe générant une deuxième surface plane par dressage, laquelle deuxième surface plane est perpendiculaire à la première surface plane, et

    dans laquelle l'au moins une troisième arête de coupe et la deuxième arête de coupe sont adaptées pour que, dans le cas où la profondeur de passe dépasse la hauteur maximale de dressage de la première arête de coupe lors d'un surfaçage-dressage réalisé par coopération de la pointe de coupe et de la première arête de coupe:

    - l'au moins une troisième arête de coupe engendre une troisième surface, la troisième surface étant contiguë à la deuxième surface;
    - la deuxième arête de coupe engendre une quatrième surface, la quatrième surface étant contiguë à la troisième surface ;
    - la troisième surface forme une saillie par rapport aux deuxième et quatrième surfaces ; et
    - la tangente en tout point d'une portion du profil de la quatrième surface forme avec la deuxième surface plane, un angle supérieur ou égal à 150°, plus préférablement supérieur ou égal à 160°, tout en étant inférieur à 180°, en mesurant ledit angle du côté extérieur des deuxième et quatrième surfaces, ladite portion étant la partie de la quatrième surface en dessous du niveau situé à 0,4 fois la hauteur de la deuxième surface plane, ledit niveau étant mesuré parallèlement au profil de la deuxième surface à partir du niveau de jonction des troisième et quatrième surfaces, la hauteur de la deuxième surface plane étant mesurée à partir de la première surface plane et la jonction des troisième et quatrième surfaces correspondant au point du profil usiné, du côté opposé à la deuxième surface plane par rapport à la saillie formée par la troisième surface, à partir duquel la tangente forme avec la deuxième surface plane un angle inférieur ou égal à 180° en le mesurant du côté extérieur à la deuxième surface.

Ainsi, en cas de dépassement de la hauteur maximale de dressage de la deuxième arête de coupe qui est la seule sensée être active lors de l'usinage, la troisième surface qui est générée par l'au moins une troisième arête de coupe au-dessus de la deuxième surface, constitue un témoin visuel plus facilement visible par l'opérateur que la quatrième surface engendrée involontairement par la deuxième arête de coupe.

Suivant des modes de réalisation préférés, l'invention comprend une ou plusieurs des caractéristiques suivantes :

- la deuxième arête de coupe est agencée au bord de la face de coupe et d'une deuxième face de dépouille, et la première arête de coupe est reliée à la deuxième arête de coupe par l'intermédiaire de ladite au moins une troisième arête de coupe, ladite au moins une troisième arête de coupe étant agencée au bord de la face de coupe et d'au moins une troisième face de dépouille, l'au moins une troisième arête de coupe et l'au moins une troisième face de dépouille formant une gorge entre la première face de dépouille et la deuxième face de dépouille ;
- la pointe de coupe et les première et deuxième arêtes de coupe, ainsi que l'au moins une troisième arête de coupe sont adaptées pour que, dans le cas où la profondeur de passe dépasse la hauteur maximale de dressage de la première arête de coupe lors d'un surfaçage-dressage réalisé par coopération de la pointe de coupe et de la première arête de coupe, le rapport suivant soit observé :

$$Hs \leq 0,6 \times Hd$$

et plus préférentiellement :

$$Hs \leq 0,45 \times Hd$$

et plus avantageusement :

$$Hs \leq 0,35 \text{ x } Hd$$

et/ou

$$Hs \geq 0,1 \text{ x } Hd$$

et plus préférentiellement :

$$Hs \leq 0,15 \text{ x } Hd$$

dans laquelle :

- 'Hd' est la hauteur de la deuxième surface plane mesurée à partir de la première surface plane ; et
- 'Hs' est la hauteur de la troisième surface en saillie, mesurée parallèlement au profil de la deuxième surface, entre, d'une part, le niveau supérieur de la deuxième surface plane et, d'autre part, le niveau de jonction des troisième et quatrième surfaces ;

- la pointe de coupe et les première et deuxième arêtes de coupe, ainsi que l'au moins une troisième arête de coupe sont adaptées pour que, dans le cas où la profondeur de passe dépasse la hauteur maximale de dressage de la première arête de coupe lors d'un surfaçage-dressage réalisé par coopération de la pointe de coupe et de la première arête de coupe, le rapport suivant soit observé :

$$e \geq 0,2 \text{ x } Hs$$

et/ou

$$e \leq Hs$$

dans laquelle :

- 'Hs' est défini comme précédemment ; et
- 'e' est l'épaisseur maximale du profil de la troisième surface, mesurée à partir de la droite fictive passant par, d'une part, le point de jonction des deuxième et troisième surfaces et, d'autre part, le point de jonction des troisième et quatrième surfaces.

L'invention propose encore un ensemble, comprenant un porte-outil et au moins une plaquette de coupe selon l'un ou l'autre aspect de l'invention, dans lequel le porte-outil est conçu pour y monter l'au moins une plaquette de coupe dans une position permettant d'usiner en surfaçage-dressage. Le porte-outil peut être prévu y monter deux, trois ou davantage de plaquettes de coupe selon l'invention dans une position permettant d'usiner par surfaçage-dressage. Cet ensemble peut être fourni à l'état monté, c'est-à-dire que la ou les plaquettes de coupe sont effectivement montées sur le porte-outil dans la position permettant d'usiner par surfaçage-dressage. Ceci permet d'utiliser cet ensemble pour réaliser un surfaçage-dressage sur une pièce.

La plaquette de coupe selon l'invention est préférentiellement en carbure cémenté. Mais alternativement, elle peut être faite en tout autre matériau approprié tel que céramique, polycristallin diamant (PCD) ou nitrure de bore cubique (CBN).

D'autres caractéristiques et avantages de l'invention apparaîtront à la lecture de la description qui suit de modes de réalisation de l'invention, donnée à titre d'exemple et en référence aux figures annexées dans lesquelles :

- la figure 1 représente schématiquement une plaquette de coupe trigone de l'art antérieur vue de dessus - c'est-à-dire en observant la plaquette de coupe avec la face de coupe principale, ou l'une d'elle si elle en a deux, face à soi - et une pièce sur laquelle l'on souhaite réaliser un épaulement au moyen d'une opération de surfaçage-dressage réalisée à l'aide d'un porte-outil sur lequel sont montées plusieurs de ces plaquettes de coupe trigones ;
- la figure 2 représente la pièce de la figure 1 après réalisation de l'épaulement dans le cas où une profondeur de passe trop importante a été utilisée ;
- la figure 3 représente en perspective la partie inférieure d'un porte-outil sur lequel sont montées trois plaquettes trigones de la figure 1 ;
- la figure 4 représente schématiquement une plaquette de coupe à section trigone suivant un mode de réalisation préféré de l'invention, la plaquette de coupe étant représentée en vue de dessus, c'est-à-dire en observant la plaquette de coupe avec une des faces de coupe face à soi ; elle représente aussi une pièce sur laquelle l'on souhaite réaliser un épaulement au moyen d'une opération de surfaçage-dressage réalisée à l'aide d'un porte-outil sur lequel sont montées plusieurs de ces plaquettes de coupe ;
- la figure 5 représente la pièce de la figure 1 après réalisation de l'épaulement dans le cas où une profondeur de passe trop importante a été utilisée ;
- la figure 6 représente une vue en perspective d'une plaquette de coupe de la figure 4 ;
- la figure 7 représente en perspective la partie inférieure d'un porte-outil identique à celui de la figure 3, sur lequel sont montées trois plaquettes selon les figures 4 et 6 ;
- la figure 8 est un agrandissement de la figure 4, mais limitée à une portion de la plaquette de coupe ;
- la figure 9 est une section transversale d'une pièce suite à une passe d'usinage par surfaçage-dressage avec un porte-outil équipé de plaquettes de coupe selon l'invention ;

- la figure 10 est un agrandissement local de la figure 9 ;
- la figure 11 est une vue similaire à la figure 9, mais limitée à la zone de surface formant saillie laquelle présente une forme différente par rapport à celle de la figure 9 ; et
- la figure 12 est une vue agrandie d'un détail de la figure 11.

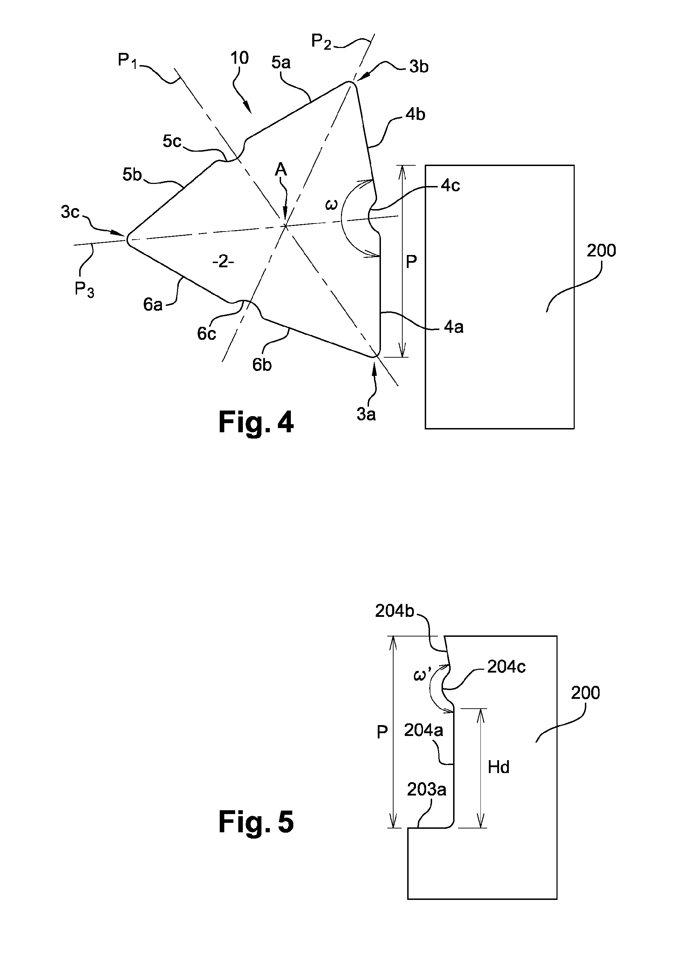

Nous allons décrire maintenant une plaquette de coupe selon un mode de réalisation préféré de l'invention en relation aux figures 4, 6 et 7 sur lesquelles la plaquette de coupe est référencée 10. La plaquette de coupe 10 est très similaire la plaquette de coupe 1 de l'art antérieur décrite en relation aux figures 1 à 3, raison pour laquelle les éléments identiques ou correspondants sont référencés par les mêmes numéros.

La plaquette de coupe 10 présente une première face de coupe 2 présentant un profil globalement triangulaire définissant trois pointes de coupe 3a, 3b et 3c. Mais comme pour la plaquette 1 de l'art antérieur, le profil de la face de coupe principale 2 est en réalité hexagonal non équiangle : chaque côté du profil triangulaire présente deux arêtes de coupe formant entre elles, en vue de dessus tel que représentée à la figure 4, un angle $\omega$ qui est inférieur à 180°, mais supérieur ou égal à 150°. Ces arêtes de coupes sont référencées 4a, 4b, 5a, 5b et 6a, 6b. Les pointes de coupe 3a, 3b et 3c et les arêtes de coupe 4a, 4b, 5a, 5b et 6a, 6b sont conformées pour permettre de réaliser des opérations de surfaçage-dressage lorsque des plaquettes de coupe 10 sont montées sur un porte-outil approprié.

A la différence de la plaquette de coupe 1 de l'art antérieur, chaque côté du profil triangulaire de la plaquette de coupe 10 présente une arête de coupe additionnelle qui relie les deux arêtes de coupe du côté considéré du profil triangulaire. En vue de dessus conformément à la figure 4, chacune de ces arêtes de coupe additionnelles forme un renfoncement dans le profil de la plaquette de coupe entre les deux arêtes de coupe du côté considéré du profil triangulaire. Ainsi, les arêtes de coupe 4a et 4b sont reliées entre elles par l'arête additionnelle 4c laquelle forme un renfoncement dans le profil de la plaquette de coupe entre ces deux arêtes de coupe 4a et 4b. Il en est de même pour l'arête additionnelle 5c, respectivement 6c, par rapport aux arêtes de coupe 5a et 5b, respectivement 6a et 6b.

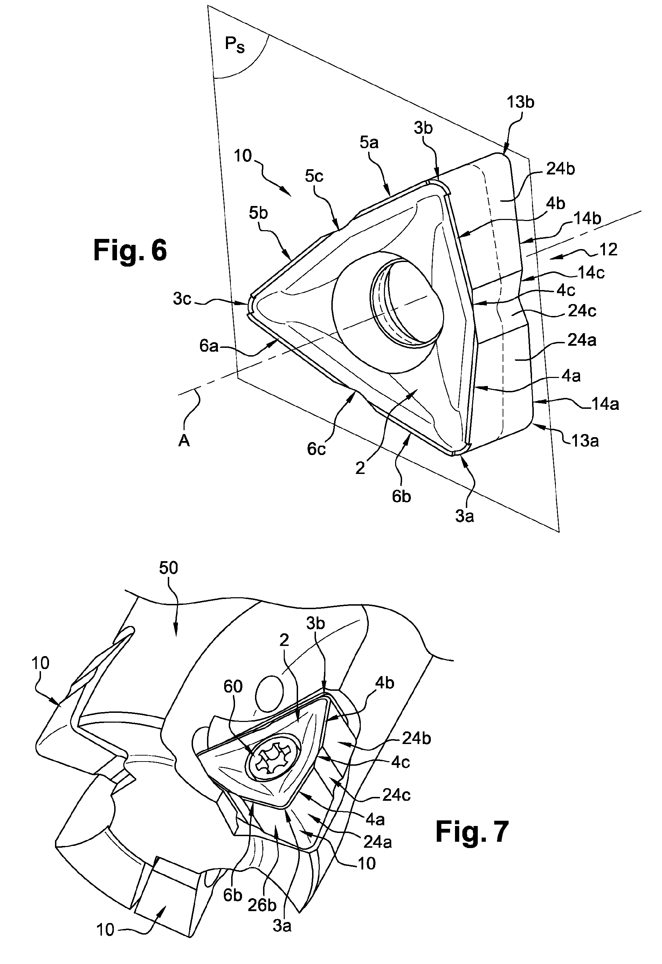

De façon similaire, la face dépouille correspondant à chacune des arêtes de coupe additionnelles 4c, 5c, 6c forme un renfoncement - ou autrement dit, une gorge - entre les faces de dépouille correspondants aux deux arêtes de coupes contiguës. Sur la figure 6, seules trois faces de dépouille sont visibles : il s'agit de celles correspondant aux arêtes 4a, 4b et 4c et sont référencées respectivement 24a, 24b et 24c, la face de dépouille 24c formant une gorge entre les faces de dépouille 24a et 24b. Sur la figure 7 est visible aussi la face de dépouille 26b correspondant à l'arête de coupe 6b.

Si lors d'une opération de surfaçage-dressage ou de dressage pur, la profondeur de passe d'usinage devait par inadvertance excéder la hauteur de l'arête de coupe réalisant le dressage, alors l'arête additionnelle contiguë et le cas échéant l'arête de coupe suivante sont également actives, c'est-à-dire usinent aussi la pièce.

Cette situation est illustrée par la figure 5 qui représente la pièce 200 de la figure 4, mais après réalisation d'un épaulement par surfaçage-dressage au moyen d'une fraise de la figure 7. Pour la clarté de l'explication, on suppose que c'est la pointe de coupe 3a des plaquettes de coupe 10 qui était active et que c'est l'arête de coupe 4a qui assurait le dressage de la pièce 200 lors de l'opération de surfaçage-dressage.

L'arête de coupe 4a a donc engendré une surface dressée 204a. La surface dressée 204a est perpendiculaire à la surface plane 203a engendrée par le surfaçage opéré par l'extrémité inférieure de la pointe de coupe 3a simultanément au dressage opéré par l'arête de coupe 4a. L'arête de coupe 4a était active sur toute sa longueur et il en résulte une hauteur maximale de dressage, notée Hd, pour la surface dressée 204a. Cependant, la profondeur de passe P dépassant la hauteur maximale de dressage Hd, l'arête de coupe additionnelle 4c et l'arête de coupe 4b ont également usiné la pièce 200. L'arête de coupe 4b a engendré une surface 204b au-dessus de la surface dressée 203a. Similairement au cas de la plaquette de coupe 1 de l'art antérieur, les deux surfaces 204a et 204b forment entre elles un angle $\omega$' qui est la conséquence de l'angle $\omega$ précité qui existe entre les arêtes de coupe 4a et 4b et donc la surface 204b n'est pas perpendiculaire à la surface 203a, ce qui est contraire au résultat souhaité lors d'une opération de surfaçage-dressage.

A la différence du cas de l'art antérieur représenté à la figure 2, la pièce 200 présente une surface 204c en saillie entre la surface dressée 204a et la surface 204b. Cette saillie est avantageusement visible à l'oeil nu par l'opérateur et sert donc de témoin visuel de profondeur de passe excessive. De ce fait, l'opérateur sait que la profondeur de passe P était excessive et peut alors corriger la pièce 200 en effectuant par exemple une opération de dressage pur pour supprimer la saillie 204c et la surface inclinée 204b de façon à rendre ces parties de la pièce 200 coplanaires avec la surface 204a déjà dressée.

Lorsque la plaquette de coupe 1 est montée sur un porte-outil, une seule de ses pointes de coupe est active lors de l'usinage comme cela est visible sur la figure 7. Mais comme cela ressort de la figure 6, la plaquette de coupe 10 à la propriété d'être à la fois indexable, réversible et susceptible d'être utilisée indifféremment pour un usinage par rotation du porte-outil à gauche ou à droite.

En effet, la plaquette de coupe 10 est indexable, c'est-à-dire qu'elle peut être tournée dans le logement du porte-outil autour de son axe A pour qu'une autre pointe de coupe de la même face de coupe 2 ou 12 soit active. Le caractère indexable de la plaquette de coupe 10 est procuré par le fait que chaque pointe de coupe 3a, 3b, 3c et les deux arêtes de coupe qui y aboutissent - autrement dit les couples d'arêtes (6b, 4a), (4b, 5a) et (5b, 6a) respectivement - se déduisent de la pointe de coupe précédente et des deux arêtes y aboutissant par une rotation de 120° autour d'un axe A. Le caractère indexable de la plaquette de coupe 10 a pour avantage de rendre active une autre pointe de coupe à la place de celle qui l'était en cas d'usure de cette dernière.

Par ailleurs, la plaquette de coupe 10 est susceptible d'être utilisée indifféremment pour un usinage par rotation du porte-outil à gauche ou à droite. Autrement dit, la plaquette de coupe 10 a une direction de coupe de type caractérise par la lettre 'N' au sens de la norme ISO 1832 :2004. Cette propriété résulte du fait que les pointes de coupe 3a, 3b, 3c et les arêtes de coupe 4a, 4b, 5a, 5b, 6a, 6b qui y aboutissent, sont agencées de manière à présenter une symétrie par rapport à chacun des plans bissecteurs P1, P2, P3 des pointes de coupe 3a, 3b et 3c. Ces plans bissecteurs P1, P2, P3 se coupent suivant l'axe A précité. Comme cela est visible sur la figure 4, les plans P1, P2, P3 se confondent avec les médianes des côtés du triangle fictif défini par les pointes de coupe 3a, 3b, 3c. Les arêtes de coupe additionnelles 4c, 5c, 6c sont de ce fait disposées à cheval sur le plan bissecteur correspondant, à savoir P3, P1, P2. Selon le sens de rotation du porte-outil, ce seront les arêtes 4, 5 et 6 référencées avec l'indice 'a' ou au contraire avec l'indice 'b' qui réaliseront le dressage lors des opérations de surfaçage-dressage.

Enfin, la plaquette de coupe 10 est réversible, c'est-à-dire qu'elle comprend une deuxième face de coupe 12 du côté opposé à la première face de coupe 2 et qu'elle est conçue pour pouvoir être retournée dans le logement du porte-outil pour rendre active au choix la première ou la deuxième face de coupe lors de l'usinage. Pour cela, la deuxième face de coupe 12 est symétrique à la première face de coupe 2 par rapport à un plan de symétrie Ps de la plaquette de coupe 10. Le plan de symétrie Ps est perpendiculaire à l'axe A. Autrement dit, la deuxième face de coupe 12 présente en symétrie par rapport au plan de symétrie Ps les trois pointes de coupe 3a, 3b, 3c et l'ensemble des arêtes de coupe 4a, 4b, 4c, 5a, 5b, 5c, 6a, 6b, 6c. Sur la figure 6, les trois pointes de coupe de la deuxième face de coupe 12 sont référencées respectivement 13a, 13b et 13c. Seules les arêtes de coupe de la deuxième face de coupe 12 symétriques à celles de la première face de coupe 2 référencées 4a, 4b et 4c, y sont visibles et sont référencées respectivement 14a, 14b et 14c.

En raison du caractère réversible, la section de la plaquette de coupe 10 prise perpendiculairement à l'axe A, est constante. Autrement dit, l'angle de dépouille normale des arêtes de coupe des deux faces de coupe 2 et 12 est nul. Autrement dit encore, les faces de dépouille ont pour génératrice une droite parallèle à l'axe A. Comme déjà mentionné, sur la figure 6, seules trois faces de dépouille 24a, 24b et 24c sont visibles : il s'agit de celles correspondant à la fois aux arêtes de coupe 4a, 4b et 4c d'une part et aux arêtes de coupe 14a, 14b et 14c d'autres part. Les faces de dépouilles correspondant aux arêtes 4a, 4b, 5a, 5b, 6a et 6b sont chacune planes - et parallèles à l'axe A - comme cela est visible sur la vue de dessus de la figure 4 et pour les faces de dépouilles 24a et 24b sur la figure 6.

Etant donné qu'intrinsèquement à la plaquette de coupe 10 l'angle de dépouille des arêtes de coupe est nul, la plaquette de coupe 10 est montée sur un porte-outil présentant un logement de montage approprié pour lui conférer les inclinaisons souhaitables par rapport aux surfaces usinées de la pièce, autrement dit de la positionner adéquatement pour autoriser l'usinage sans qu'il y ait de contact des faces de dépouilles avec les surfaces usinées.

Compte tenu de ce montage incliné de la plaquette de coupe 10, les arêtes de coupe 4a, 4b, 5a, 5b, 6a, 6b de la première face de coupe 2 ne sont pas contenues dans un seule et même plan perpendiculaire à l'axe A, mais sont inclinées par rapport à un tel plan, et elles ne sont pas non plus rectilignes, mais légèrement elliptiques tout en étant contenu dans le plan de la face de dépouille correspondante, ceci de manière à assurer qu'elles réalisent la partie dressage de la pièce usinée lors d'une opération de surfaçage-dressage. Ces mesures permettent d'assurer que chaque point de l'arête de coupe active assurant le dressage pendant une opération de surfaçage-dressage soit à une même distance de l'axe de révolution du porte-outil pour engendrer une surface plane perpendiculaire à la surface plane obtenue simultanément par surfaçage.

L'on remarquera que la vue de dessus de la plaquette de coupe 10 de la figure 4 n'est autre que la projection orthogonale de la face de coupe 2 sur un plan perpendiculaire à l'axe A, par exemple sur le plan de symétrie Ps.

L'extrémité des pointes de coupe 3a, 3b, 3c peuvent classiquement être arrondis - comme représenté dans les figures - ou chanfreinés et comporter éventuellement des plats de planage. Bien entendu, la plaquette de coupe 10 peut également présenter un trou de fixation comme représenté à la figure 6 auquel cas l'axe de ce trou de fixation est l'axe A.

Comparées à celles de la plaquette de coupe 1 de l'art antérieur et pour un même angle ω, les arêtes de coupe 4a, 4b, 5a, 5b, 6a, 6b - qui servent au dressage de surface - de la plaquette de coupe 10 sont plus courtes, étant donné la présence des arêtes de coupe additionnelles 4c, 5c, 6c qui n'assurent pas le dressage. De ce fait, la forme et le dimensionnement des arêtes de coupe additionnelles 4c, 5c et 6c est choisi par l'homme du métier comme un compromis entre, d'une part, être suffisamment grande pour engendrer une saillie visible à l'oeil nu sur la pièce usinée si la profondeur de passe dépasse la hauteur maximale de dressage de la plaquette de coupe 10 et, d'autre part, procurer une hauteur maximale de dressage acceptable, ainsi que de préserver une résistance mécanique suffisante pour la plaquette de coupe 10.

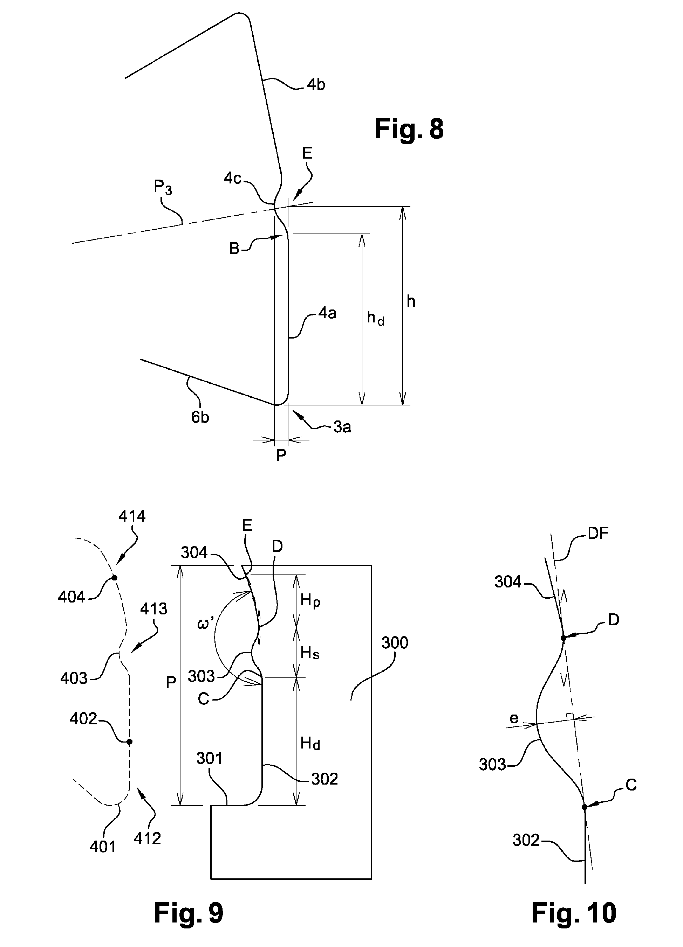

A cette fin, un dimensionnement préférentiel est donné en relation avec la figure 8 pour les plaquettes de coupe de forme trigonale. Le figure 8 est un agrandissement de la partie droite de la plaquette de coupe 10, représentée en projection orthogonale sur un plan perpendiculaire à l'axe A.

Les distances hd, h et p définies ci-après sont chacune déterminées sur la représentation de la plaquette de coupe 10 en projection orthogonale sur un plan perpendiculaire à l'axe A, ce qui correspond à la représentation de la figure 8.

La distance $h_d$ est la hauteur de l'arête de dressage prise en considération, en l'occurrence l'arête de coupe 4a. La hauteur $h_d$ est mesurée entre, d'une part, l'extrémité inférieure de la pointe de coupe contiguë à l'arête de dressage considérée, en l'occurrence la pointe de coupe 3a, et d'autre part, l'extrémité supérieure - référencée B - de l'arête de dressage considérée. Autrement dit, l'extrémité supérieure de l'arête de dressage considérée est le point extrémal B de l'arête de coupe où cesse le dressage et où commence la saillie engendrée par l'arête de coupe additionnelle 4c. Autrement dit encore, l'extrémité supérieure de l'arête de dressage considérée est le point extrémal supérieur B du segment rectiligne représentant, sur la figure 8, l'arête de dressage concernée, en l'occurrence l'arête de coupe 4a. Il est précisé que la mesure de la hauteur $h_d$ est faite, sur la figure 8, avec l'arête 4a orientée verticalement, autrement dit la mesure est faite le long d'une droite fictive parallèle au segment représentant l'arête de coupe 4a sur la figure 8.

La distance h caractérise la hauteur de dressage maximale théorique si la plaquette de coupe 10 n'était pas pourvue de l'arête de coupe additionnelle contiguë à l'arête de dressage considérée pour la mesure de la hauteur $h_d$ ; il s'agit en l'occurrence de l'arête de coupe additionnelle 4c. Autrement dit, la hauteur h est mesurée entre, d'une part, l'extrémité inférieure de la pointe de coupe contiguë à l'arête de dressage considérée, en l'occurrence la pointe de coupe 3a, et, d'autre part, le point d'intersection - référencé E - de la droite représentant le plan bissecteur de symétrie des faces de coupe 2 et 12 traversant cette arête de coupe additionnelle - en l'occurrence le plan P3 - avec la droite fictive passant par le segment représentant l'arête de dressage concernée, en l'occurrence l'arête de dressage 4a. La mesure de la hauteur h est là-aussi faite, sur la figure 8, avec l'arête 4a orientée verticalement, autrement dit la mesure est faite le long d'une droite fictive parallèle au segment représentant l'arête de coupe 4a sur la figure 8.

La distance notée 'p' est la profondeur maximale de la concavité formée par l'arête de coupe additionnelle considérée, en l'occurrence l'arête 4c. La profondeur maximale p est mesurée orthogonalement à partir de la droite fictive comprenant le segment représentant l'arête de coupe 4a sur la figure 8.

Il est avantageux de choisir : $h_d \leq 0{,}95 \times h$. Plus avantageusement, on choisit : $h_d \leq 0{,}9 \times h$. Mais il est préférable de choisir : $h_d \geq 0{,}6 \times h$. Plus avantageusement, on choisit : $h_d \geq 0{,}7 \times h$. Enfin, il est avantageux de choisir : $p \geq 0{,}05 \times h$. Mais il est préférable qu'on choisisse : $p \leq 0{,}2 \times h$.

Bien entendu, la présente invention n'est pas limitée au mode de réalisation préféré décrit en relation avec les figures 4 à 8, mais de nombreuses variantes sont possibles.

Ainsi, le profil des arêtes de coupe additionnelles 4c, 5c, 6c - et par voie de conséquence, la section transversale des faces de dépouilles correspondantes - est un arc de cercle dans le mode de réalisation représenté dans les figures, mais ce profil peut être différent. Par exemple, chaque arête de coupe additionnelle 4c, 5c, 6c peut en fait être subdivisée en une succession d'arêtes de coupe qui définissent ensemble le profil en renfoncement entre les arêtes de coupe de dressage contiguës. Par exemple, certaines de ces arêtes de coupe peuvent être rectilignes et reliées entre elles par des arêtes de coupe courbes, pour former par exemple un renfoncement en forme de U. De plus, le profil du renfoncement ainsi défini peut ne pas être symétrique par rapport au plan bissecteur de symétrie concerné P1, P2 ou P3, bien que disposé à cheval sur celui-ci, car la symétrie n'est utile que pour ce qui concerne les pointes de coupe 3a, 3b, 3c et les arêtes de coupe de dressage 4a, 4b, 5a, 5b, 6a, 6b et leurs homologues 13a, 13b, 13c, 14a, 14b, 15a, 15b, 16a, 16b de la deuxième face de coupe 12.

Par ailleurs, la plaquette de coupe 10 peut ne pas être réversible, auquel cas elle ne présente pas la deuxième face de coupe 12. Dans ce cas, la section transversale - c'est-à-dire perpendiculaire à l'axe A - de la plaquette de coupe peut diminuer progressivement à partir de la face de coupe 2. Autrement dit, les arêtes de coupe de la face de coupe 2 peuvent présenter une angle de dépouille normale supérieur à 0°. De plus, l'ensemble des arêtes de coupe de la face de coupe 2 peuvent être coplanaires et contenues dans un plan perpendiculaire à l'axe A. La plaquette de coupe est alors montée sur un porte-outil approprié assurant un positionnement de l'arête de dressage active parallèle à l'axe de rotation du porte-outil. La projection orthogonale de la face de coupe 2 sur un plan perpendiculaire à l'axe A reste identique à celui de la figure 4.

Par ailleurs, la plaquette de coupe 10 peut ne pas être prévue pour pouvoir être utilisée indifféremment pour un usinage par rotation du porte-outil à gauche ou à droite, tout en conservant son caractère indexable. Dans ce cas, les pointes de coupe 3a, 3b, 3c et les arêtes de coupe 4a, 4b, 5a, 5b, 6a, 6b qui y aboutissent, ne sont pas agencées de manière à présenter une symétrie par rapport à chacun des plans bissecteurs P1, P2, P3 des pointes de coupe 3a, 3b et 3c. Les arêtes de coupe additionnelles 4c, 5c, 6c ne sont plus alors disposées à cheval sur les médianes des côtés du triangle fictif défini par les pointes de coupe 3a, 3b, 3c.

Bien entendu, la ou les faces de coupe des plaquettes de coupe selon l'invention peuvent présenter des brises-copeaux ou non.

Plus généralement, l'invention concerne également les plaquettes de coupe qui n'ont pas un profil trigone. En fait, à chaque fois qu'une plaquette de coupe présente, en profil, deux arêtes de coupe successives qui engendrent lors de l'usinage deux surfaces correspondantes sur la pièce usinée lesquelles forment entre elles un angle inférieur à 180°, mais toutefois proche de 180° alors qu'il est souhaitable que seulement une seule des deux arêtes soit active lors de l'opération d'usinage, il peut être agencé sur la plaquette de coupe au moins une arête de coupe additionnelle formant un renfoncement entre ces deux arêtes de coupe laquelle arête de coupe additionnelle sert à usiner une saillie formant un témoin visuel sur la pièce usinée. Cette au moins une arête de coupe additionnelle présente une face de dépouille : le cas échéant, elles forment ensemble une gorge entre les faces de dépouille des deux arêtes de coupe pour autoriser un usinage par cette arête de coupe additionnelle sans risque de casser la plaquette de coupe.

Là-encore, la dimension de ce renfoncement est un compromis entre, d'une part, être suffisamment grande pour engendrer une saillie visible à l'oeil nu sur la pièce usinée si la profondeur de passe dépasse la hauteur maximale de dressage de la plaquette de coupe et, d'autre part, procurer une hauteur maximale de dressage acceptable, ainsi que de préserver une résistance mécanique suffisante pour la plaquette de coupe.

Dans le cas d'une plaquette de coupe apte à réaliser des opérations de surfaçage-dressage, un dimensionnement préférentiel est donné en référence à la figure 9.

La figure 9 représente la section transversale d'une pièce sur laquelle a été effectuée une passe de surfaçage-dressage avec le porte-outil portant les plaquettes de coupe, mais avec une profondeur de passe ayant dépassé la hauteur de dressage maximale des plaquettes de coupe utilisées. La ligne en pointillés représente de façon symbolique une partie du profil d'une face de coupe d'une plaquette de coupe ayant servi à cette passe de surfaçage-dressage. La surface plane 301 est celle obtenue par surfaçage par une pointe de coupe 401 de la plaquette de coupe. La surface plane 302 est celle obtenue par dressage simultanée au surfaçage de la surface 301, le dressage étant effectuée par l'arête de coupe 401 de la plaquette de coupe. Les surfaces planes 301 et 302 sont donc perpendiculaire entre elles. Les références 412, 413 et 414 pointent vers les faces de dépouilles respectives des arêtes de coupe 402, 403 et 404.

La surface 304 est engendrée par l'arête de coupe 404 qui n'aurait pas dû être active, mais l'a été du fait de la profondeur de passe P trop importante.

Entre les surfaces 302 et 304 est la surface 303 en saillie laquelle sert de témoin visuel de dépassement de la profondeur de passe maximale admissible pour le dressage. La surface 303 en saillie est donc celle engendrée par l'au moins une arête de coupe additionnelle 403 formant un renfoncement entre les deux arêtes de coupe 402 et 404.

La conformation et le positionnement de l'arête de coupe 404 peuvent être adaptées pour engendrer une surface 304 plane. Dans ce cas, la surface 304 forme un angle $\omega'$ proche de, mais inférieur à 180°, par rapport à la surface dressée 302, mesurée du côté extérieur des surfaces 302 et 304. L'invention est tout particulièrement applicable au cas où l'angle $\omega'$ est supérieur à 150°, voire 160°.

En variante, la conformation et le positionnement de l'arête de coupe 404 peuvent être adaptées pour engendrer une surface 304 présentant un profil non plan, par exemple courbe comme représenté sur la figure 9. Dans ce cas, l'invention est considérée comme applicable dès lors que la tangente en tout point d'une portion du profil de la surface 304, forme avec la surface plane 302, un angle $\omega'$ qui respecte les valeurs précitées, l'angle $\omega'$ étant mesuré du côté extérieur des surfaces 302 et 304.

Cette portion du profil correspond conventionnellement à la partie de la surface 304 en dessous du niveau situé à une hauteur Hp égale à 0,4 fois la hauteur Hd de la surface dressée 302, ce niveau étant mesuré parallèlement au profil de la surface dressée 302 à partir du niveau de jonction des surfaces 303, 304. La jonction des surfaces 303 et 304 est repérée par la lettre D tandis que l'extrémité supérieure de cette portion du profil ainsi définie est repérée par la lettre E.

La distance Hd est la hauteur de la surface dressée 302 mesurée entre, d'une part, la surface 301, et, d'autre part, la limite supérieure de la surface dressée 302 à partir de laquelle commence la surface 303 en saillie qui n'est pas coplanaire avec la surface dressée 302. La limite supérieure de la surface dressée 302 est repérée par le point C. La mesure est faite perpendiculairement à la surface 301 ou autrement dit, parallèlement à la surface dressée 302 en vue de profil.

La jonction D des surfaces 303 et 304 est considéré conventionnellement correspondre au point du profil usiné, du côté opposé à la surface dressée 302 par rapport à la saillie formée par la surface 303, à partir duquel la tangente forme avec la surface dressée 302 un angle inférieur ou égal à 180° en le mesurant du côté extérieur à la surface dressée 302. Sur la figure 9, la zone de la jonction des surfaces 303 et 304 présente un profil en arc de cercle, et la tangente au point D du profil usiné présente un angle de 180°.

La distance Hs est la hauteur de la saillie définie comme étant mesurée entre, d'une part, la limite supérieure de la surface dressée 302, autrement dit le point C, et, d'autre part, le niveau de la jonction D des surfaces 303 et 304, cette mesure étant faite perpendiculairement à la surface 301, ou autrement dit, parallèlement à la surface dressée 302 en vue de profil.

La distance notée 'e' est l'épaisseur maximale de la saillie formée par la surface 303. Comme cela est illustrée sur la vue de détail agrandie de la figure 10, cette épaisseur maximale 'e' est mesurée à partir de la droite fictive DF passant par les points C et D et orthogonalement à celle-ci.

Il est préférable de définir les arêtes de coupe de la plaquette de coupe pour que : Hs ≤ 0,6 x Hd, et plus avantageusement, pour que : H s ≤ 0,45 x Hd, voire Hs ≤ 0,35 x Hd. Mais il est préférable de définir les arêtes de coupe de la plaquette de coupe pour que : Hs ≥ 0,1 x Hd, et plus avantageusement pour que : Hs ≥ 0,15 x Hd. Enfin, il est préférable de définir les arêtes de coupe de la plaquette de coupe pour que : e ≥ 0,2 x Hs, plus avantageusement e ≥ 0,35 x Hs, mais que : e ≤ Hs.

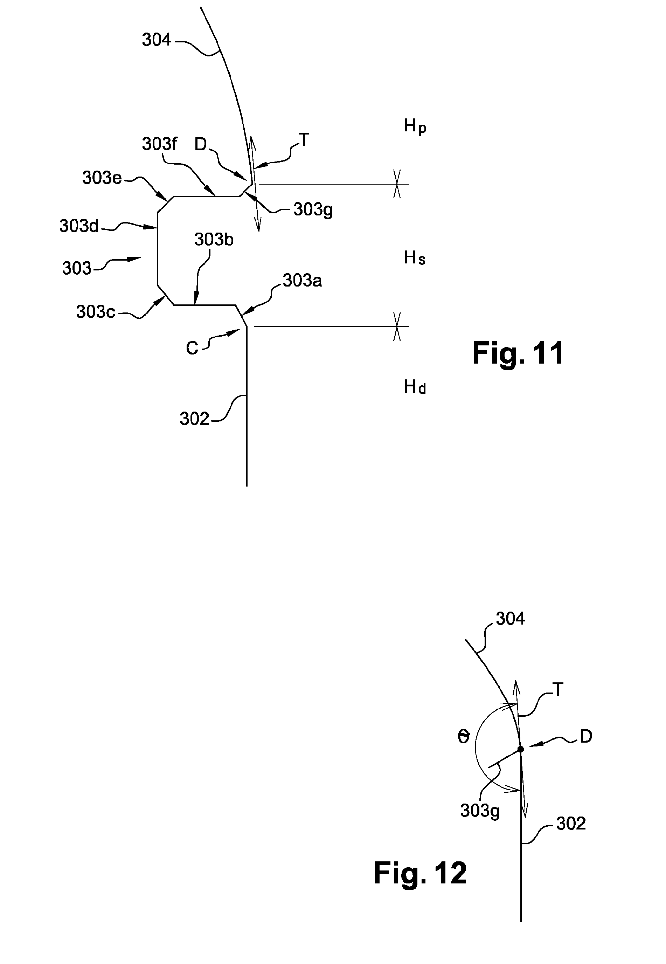

La figure 11 illustre un autre exemple de détermination de la jonction D des surfaces 303 et 304 pour un profil différent de la surface 303. Similairement à la figure 9, la figure 11 représente la section transversale d'une pièce sur laquelle a été effectuée une passe de surfaçage-dressage, mais limitée à la zone autour de la surface 303 formant une saillie entre la surface dressée 302 et la surface 304. La surface 303 se décompose en l'occurrence en plusieurs segments rectilignes 303b, 303d, 303f reliés entre eux et aux surfaces 302 et 304 par des chanfreins 303a, 303c, 303e, 303g. Par application de la définition donnée plus haut, la jonction D entre les surfaces 303 et 304 est l'extrémité supérieure du chanfrein 303g puisque c'est à partir de cet endroit que la tangente au profil présente un angle inférieur à 180° par rapport à la surface dressée 302, mesuré du côté extérieur à la surface dressée 302. La figure 12 représente plus particulièrement le chanfrein 303g et la portion de la surface 304 partant du chanfrein 303g. La tangente à l'extrémité supérieure du chanfrein 303g est repérée T comme sur la figure 11. La surface dressée 302 est représentée fictivement contiguë à l'extrémité supérieure du chanfrein 303g pour représenter plus commodément l'angle - noté θ - entre la tangente T et la surface dressée 302, mesurée du côté extérieur de la surface dressée 302.

Bien entendu, la présente invention n'est pas limitée aux exemples et au mode de réalisation décrits et représentés, mais elle est susceptible de nombreuses variantes accessibles à l'homme de l'art.

**Revendications**

1. Plaquette de coupe (10), comprenant :

 - une face de coupe (2) ;
 - trois pointes de coupe (3a, 3b, 3c) agencées chacune au bord de la face de coupe ;
 - trois paires d'arêtes de coupe (6b, 4a ; 4b, 5a ;

5b, 6a), chacune des paires étant formée par une première arête de coupe et une deuxième arête de coupe qui aboutissent à l'une respective des pointes de coupe ;

dans laquelle :

 - la première arête de coupe (4a ; 5a ; 6a) de chacune des trois paires est agencée au bord de la face de coupe et d'une première face de dépouille correspondante (24a ; 25a ; 26a) ;
 - la deuxième arête de coupe (4b ; 5b ; 6b) de chacune des trois paires est agencée au bord de la face de coupe et d'une deuxième face de dépouille correspondante (24b ; 25b ; 26b) ;
 - chaque paire d'arête de coupes se déduit de chacune des autres paires d'arêtes de coupe par une rotation de 120° autour d'un même axe (A) ;
 - les trois pointes de coupe et les trois paires d'arêtes de coupe présentent une symétrie par rapport à chacun des plans bissecteurs (P1 ;P2 ; P3) des trois pointes de coupe ; et **caractérisée en ce que** :

  - la première arête de coupe de chacune des paires est reliée à la deuxième arête de coupe d'une autre des paires par l'intermédiaire d'au moins une troisième arête de coupe (4c ; 5c ; 6c), ladite au moins une troisième arête de coupe étant agencée au bord de la face de coupe et d'au moins une troisième face de dépouille correspondante (24c ; 25c ; 26c), l'au moins une troisième arête de coupe et l'au moins une troisième face de dépouille correspondante formant une gorge entre la première face de dépouille de la première arête de coupe considérée et la deuxième face de dépouille de la deuxième arête de coupe considérée.

2. Plaquette de coupe selon la revendication 1, dans laquelle chacune des pointes de coupe et l'une quelconque des première et deuxième arêtes de coupe aboutissant à la pointe de coupe considérée, sont adaptées pour réaliser en coopération un surfaçage-dressage, la pointe de coupe réalisant le surfaçage et la première ou deuxième arête de coupe réalisant le dressage.

3. Plaquette de coupe selon la revendication 1 ou 2, dans laquelle les première et deuxième arêtes de coupe de chacune des paires d'arêtes de coupe se projettent orthogonalement sur un plan perpendiculaire audit axe (A) en un segment rectiligne respectif.

4. Plaquette de coupe selon la revendication 3, dans laquelle le rapport suivant est observé pour l'une quelconque des première et deuxième arêtes de coupe :

$$hd \geq 0{,}6 \text{ x } h$$

et plus préférentiellement :

$$hd \geq 0{,}7 \text{ x } h$$

dans laquelle :

- $h_d$ est la hauteur de l'arête de coupe considérée, en projection orthogonale sur un plan perpendiculaire audit axe (A),
- h : la hauteur du point d'intersection (E) entre, d'une part, la droite fictive comprenant le segment rectiligne en lequel se projette orthogonalement l'arête de coupe considérée sur le plan perpendiculaire audit axe (A) et, d'autre part, celui des plans bissecteurs croisant l'au moins une arête de coupe additionnelle contiguë à l'arête de coupe considérée,

hd et h étant mesurée le long d'une droite parallèle au segment rectiligne en lequel se projette orthogonalement l'arête de coupe considérée sur le plan perpendiculaire audit axe (A) depuis l'extrémité inférieure de la pointe de coupe à laquelle aboutit l'arête de coupe considérée.

5. Plaquette de coupe selon la revendication 3 ou 4, dans laquelle le rapport suivant est observé pour l'une quelconque des première et deuxième arêtes de coupe :

$$hd \leq 0{,}95 \text{ x } h$$

et plus préférentiellement :

$$hd \leq 0{,}9 \text{ x } h$$

dans laquelle :

- $h_d$ est la hauteur de l'arête de coupe considérée, en projection orthogonale sur un plan perpendiculaire audit axe (A),
- h est la hauteur du point d'intersection (E) entre, d'une part, la droite fictive comprenant le segment rectiligne en lequel se projette orthogonalement l'arête de coupe considérée sur le plan perpendiculaire audit axe (A) et, d'autre part, celui des plans bissecteurs croisant l'au moins une arête de coupe additionnelle contiguë à l'arête de coupe considérée,

hd et h étant mesurée le long d'une droite parallèle au segment rectiligne en lequel se projette orthogonalement l'arête de coupe considérée sur le plan perpendiculaire audit axe (A) depuis l'extrémité inférieure de la pointe de coupe à laquelle aboutit l'arête de coupe considérée.

6. Plaquette de coupe selon l'une quelconque des revendications 3 à 5, dans laquelle le rapport suivant est observé pour l'une quelconque des première et deuxième arêtes de coupe :

$$p \geq 0{,}05 \text{ x } h$$

dans laquelle :

- p est la profondeur maximale du renfoncement défini par l'au moins une arête de coupe additionnelle en projection orthogonale sur un plan perpendiculaire audit axe (A) et mesurée orthogonalement à partir d'une droite fictive comprenant le segment rectiligne en lequel se projette orthogonalement l'arête de coupe considérée sur le plan perpendiculaire audit axe (A), et
- h est la hauteur du point d'intersection (E) entre, d'une part, la droite fictive comprenant le segment rectiligne en lequel se projette orthogonalement l'arête de coupe considérée sur le plan perpendiculaire audit axe (A) et, d'autre part, celui des plans bissecteurs croisant l'au moins une arête de coupe additionnelle contiguë à l'arête de coupe considérée, h étant mesurée le long d'une droite parallèle au segment rectiligne en lequel se projette orthogonalement l'arête de coupe considérée sur le plan perpendiculaire audit axe (A) depuis l'extrémité inférieure de la pointe de coupe à laquelle aboutit l'arête de coupe considérée.

7. Plaquette de coupe selon l'une quelconque des revendications 3 à 6, dans laquelle le rapport suivant est observé pour l'une quelconque des première et deuxième arêtes de coupe :

$$p \leq 0{,}2 \text{ x } h$$

dans laquelle :

- p est la profondeur maximale du renfoncement défini par l'au moins une arête de coupe additionnelle en projection orthogonale sur un plan perpendiculaire audit axe (A) et mesurée orthogonalement à partir d'une droite fictive comprenant le segment rectiligne en lequel se projette orthogonalement l'arête de coupe considérée sur le plan perpendiculaire audit axe (A), et

- h est la hauteur du point d'intersection (E) entre, d'une part, la droite fictive comprenant le segment rectiligne en lequel se projette orthogonalement l'arête de coupe considérée sur le plan perpendiculaire audit axe (A) et, d'autre part, celui des plans bissecteurs croisant l'au moins une arête de coupe additionnelle contiguë à l'arête de coupe considérée, h étant mesurée le long d'une droite parallèle au segment rectiligne en lequel se projette orthogonalement l'arête de coupe considérée sur le plan perpendiculaire audit axe (A) depuis l'extrémité inférieure de la pointe de coupe à laquelle aboutit l'arête de coupe considérée.

8. Plaquette de coupe selon l'une quelconque des revendications 1 à 7, comprenant une deuxième face de coupe symétrique à la première face de coupe par rapport à un plan perpendiculaire audit axe (A).

9. Plaquette de coupe, comprenant :

   - une face de coupe ;
   - une pointe de coupe (401) agencée au bord de la face de coupe ;
   - une première arête de coupe (402) agencée au bord de la face de coupe et d'une première face de dépouille, la première arête de coupe aboutissant à la pointe de coupe ;
   - une deuxième arête de coupe (404) et au moins une troisième arête de coupe (403) ;

   dans laquelle la pointe de coupe et la première arête de coupe sont adaptées pour réaliser en coopération un surfaçage-dressage, la pointe de coupe générant une première surface plane (301) par surfaçage et la première arête de coupe générant une deuxième surface plane (302) par dressage, laquelle deuxième surface plane est perpendiculaire à la première surface plane, et

   **caractérisée en ce que** l'au moins une troisième arête de coupe et la deuxième arête de coupe sont adaptées pour que, dans le cas où la profondeur de passe dépasse la hauteur maximale de dressage (Hd) de la première arête de coupe lors d'un surfaçage-dressage réalisé par coopération de la pointe de coupe et de la première arête de coupe:

   - l'au moins une troisième arête de coupe engendre une troisième surface (303), la troisième surface étant contiguë à la deuxième surface (302);
   - la deuxième arête de coupe engendre une quatrième surface (304), la quatrième surface étant contiguë à la troisième surface ;
   - la troisième surface (303) forme une saillie par rapport aux deuxième et quatrième surfaces (302, 304) ; et
   - la tangente en tout point d'une portion du profil de la quatrième surface (304) forme avec la deuxième surface plane (302), un angle ($\omega'$) supérieur ou égal à 150°, plus préférablement supérieur ou égal à 160°, tout en étant inférieur à 180°, en mesurant ledit angle du côté extérieur des deuxième et quatrième surfaces (302, 304), ladite portion étant la partie de la quatrième surface (304) en dessous du niveau situé à 0,4 fois la hauteur (Hd) de la deuxième surface plane (302), ledit niveau étant mesuré parallèlement au profil de la deuxième surface (302) à partir du niveau de jonction des troisième et quatrième surfaces (303, 304), la hauteur (Hd) de la deuxième surface plane (302) étant mesurée à partir de la première surface plane (301) et la jonction des troisième et quatrième surfaces (303, 304) correspondant au point du profil usiné, du côté opposé à la deuxième surface plane (302) par rapport à la saillie formée par la troisième surface, à partir duquel la tangente forme avec la deuxième surface plane (302) un angle inférieur ou égal à 180° en le mesurant du côté extérieur à la deuxième surface.

10. Plaquette de coupe selon la revendication 9, dans laquelle :

   - la deuxième arête de coupe (404) est agencée au bord de la face de coupe et d'une deuxième face de dépouille ; et
   - la première arête de coupe (402) est reliée à la deuxième arête de coupe par l'intermédiaire de ladite au moins une troisième arête de coupe (403), ladite au moins une troisième arête de coupe étant agencée au bord de la face de coupe et d'au moins une troisième face de dépouille, l'au moins une troisième arête de coupe et l'au moins une troisième face de dépouille formant une gorge entre la première face de dépouille et la deuxième face de dépouille.

11. Plaquette de coupe selon la revendication 9 ou 10, dans laquelle la pointe de coupe et les première et deuxième arêtes de coupe, ainsi que l'au moins une troisième arête de coupe sont adaptées pour que, dans le cas où la profondeur de passe dépasse la hauteur maximale de dressage (Hd) de la première arête de coupe lors d'un surfaçage-dressage réalisé par coopération de la pointe de coupe et de la première arête de coupe, le rapport suivant soit observé :

$$Hs \leq 0,6 \ x \ Hd$$

et plus préférentiellement :

$$Hs \leq 0,45 \ x \ Hd$$

et plus avantageusement :

$$Hs \leq 0,35 \ x \ Hd$$

dans laquelle :

- 'Hd' est la hauteur de la deuxième surface plane (302) mesurée à partir de la première surface plane (301) ; et
- 'Hs' est la hauteur de la troisième surface en saillie, mesurée parallèlement au profil de la deuxième surface (302), entre, d'une part, le niveau supérieur de la deuxième surface plane et, d'autre part, le niveau de jonction des troisième et quatrième surfaces (303, 304).

12. Plaquette de coupe selon l'une quelconque des revendications 9 à 11, dans laquelle la pointe de coupe et les première et deuxième arêtes de coupe, ainsi que l'au moins une troisième arête de coupe sont adaptées pour que, dans le cas où la profondeur de passe dépasse la hauteur maximale de dressage (Hd) de la première arête de coupe lors d'un surfaçage-dressage réalisé par coopération de la pointe de coupe et de la première arête de coupe, le rapport suivant soit observé :

$$Hs \geq 0,1 \ x \ Hd$$

et plus préférentiellement :

$$Hs \leq 0,15 \ x \ Hd$$

dans laquelle :

- 'Hd' est la hauteur de la deuxième surface plane (302) mesurée à partir de la première surface plane (301) ; et
- 'Hs' est la hauteur de la troisième surface en saillie, mesurée parallèlement au profil de la deuxième surface (302), entre, d'une part, le niveau supérieur de la deuxième surface plane et, d'autre part, le niveau de jonction des troisième et quatrième surfaces (303, 304).

13. Plaquette de coupe selon l'une quelconque des revendications 9 à 12, dans laquelle la pointe de coupe et les première et deuxième arêtes de coupe, ainsi que l'au moins une troisième arête de coupe sont adaptées pour que, dans le cas où la profondeur de passe dépasse la hauteur maximale de dressage (Hd) de la première arête de coupe lors d'un surfaçage-dressage réalisé par coopération de la pointe de coupe et de la première arête de coupe, le rapport suivant soit observé :

$$e \geq 0,2 \ x \ Hs$$

dans laquelle :

- 'Hs' est la hauteur de la troisième surface en saillie, mesurée parallèlement au profil de la deuxième surface (302), entre, d'une part, le niveau supérieur de la deuxième surface plane et, d'autre part, le niveau de jonction des troisième et quatrième surfaces (303, 304).
- 'e' est l'épaisseur maximale du profil de la troisième surface, mesurée à partir de la droite fictive (DF) passant par, d'une part, le point de jonction des deuxième et troisième surfaces (302, 303) et, d'autre part, le point de jonction des troisième et quatrième surfaces (303, 304).

14. Plaquette de coupe selon la revendication 9, Plaquette de coupe selon l'une quelconque des revendications 9 à 13, dans laquelle la pointe de coupe et les première et deuxième arêtes de coupe, ainsi que l'au moins une troisième arête de coupe sont adaptées pour que, dans le cas où la profondeur de passe dépasse la hauteur maximale de dressage (Hd) de la première arête de coupe lors d'un surfaçage-dressage réalisé par coopération de la pointe de coupe et de la première arête de coupe, le rapport suivant soit observé :

$$e \leq Hs$$

dans laquelle :

- 'Hs' est la hauteur de la troisième surface en saillie, mesurée parallèlement au profil de la deuxième surface (302), entre, d'une part, le niveau supérieur de la deuxième surface plane et, d'autre part, le niveau de jonction des troisième et quatrième surfaces (303, 304).

- 'e' est l'épaisseur maximale du profil de la troisième surface, mesurée à partir de la droite fictive (DF) passant par, d'une part, le point de jonction des deuxième et troisième surfaces (302, 303) et, d'autre part, le point de jonction des troisième et quatrième surfaces (303, 304).

15. Ensemble, comprenant :

- un porte-outil (50) ; et
- au moins une plaquette de coupe selon l'une quelconque des revendications 1 à 14; dans lequel le porte-outil est conçu pour y monter la plaquette de coupe dans une position permettant d'usiner par surfaçage-dressage.

**Patentansprüche**

1. Schneidplatte (10), umfassend:

- eine Schneidfläche (2);
- drei Schneidspitzen (3a, 3b, 3c), die jeweils am Rand der Schneidfläche angeordnet sind;
- drei Paare von Schneidkanten (6b, 4a; 4b, 5a; 5b, 6a), wobei jedes der Paare von einer ersten Schneidkante und einer zweiten Schneidkante gebildet ist, die an jeweils einer der Schneidspitzen enden;

bei der:

- die erste Schneidkante (4a; 5a; 6a) jedes der drei Paare am Rand der Schneidfläche und einer ersten entsprechenden Freifläche (24a; 25a; 26a) angeordnet ist;
- die zweite Schneidkante (4b; 5b; 6b) jedes der drei Paare am Rand der Schneidfläche und einer zweiten entsprechenden Freifläche (24b; 25b; 26b) angeordnet ist;
- sich jedes Schneidkantenpaar von jedem der anderen Schneidkantenpaare durch eine Drehung von 120° um eine selbe Achse (A) ableitet;
- die drei Schneidspitzen und die drei Schneidkantenpaare eine Symmetrie in Bezug zu jeder der halbierenden Ebenen (P1; P2; P3) der drei Schneidspitzen aufweisen; und

**dadurch gekennzeichnet, dass**:

- die erste Schneidkante jedes der Paare mit der zweiten Schneidkante eines anderen der Paare mit Hilfe mindestens einer dritten Schneidkante (4c; 5c; 6c) verbunden ist, wobei die mindestens eine dritte Schneidkante am Rand der Schneidfläche und mindestens einer dritten entsprechenden Freifläche (24c; 25c, 26c) angeordnet ist, wobei mindestens eine dritte Schneidkante und mindestens eine dritte entsprechende Freifläche eine Rille zwischen der ersten Freifläche der ersten betreffenden Schneidkante und der zweiten Freifläche der zweiten betreffenden Schneidkante bilden.

2. Schneidplatte nach Anspruch 1, bei der jede der Schneidspitzen und eine der ersten und zweiten Schneidkanten, die an der betreffenden Schneidspitze enden, geeignet sind, im Zusammenwirken ein Planfräsen-Plandrehen durchzuführen, wobei die Schneidspitze das Planfräsen und die erste oder zweite Schneidkante das Plandrehen durchführt.

3. Schneidplatte nach Anspruch 1 oder 2, bei der die ersten und zweiten Schneidkanten jedes der Schneidkantenpaare orthogonal auf eine Ebene senkrecht auf die Achse (A) in einem jeweiligen geraden Segment projiziert ist.

4. Schneidplatte nach Anspruch 3, bei der das folgende Verhältnis für eine der ersten und zweiten Schneidkanten zu beobachten ist:

$$hd \geq 0,6 \times h$$

und vorzugsweise:

$$hd \geq 0,7 \times h$$

wobei:

- hd die Höhe der betreffenden Schneidkante in orthogonaler Projektion auf eine Ebene senkrecht auf die Achse (A) ist,
- h die Höhe des Schnittpunktes (E) zwischen einerseits der fiktiven Geraden, umfassend das gerade Segment, in dem die betreffende Schneidkante auf die Ebene senkrecht auf die Achse (A) projiziert ist, und andererseits jener der halbierenden Ebenen ist, die mindestens eine zusätzliche Schneidkante angrenzend an die betreffende Schneidkante kreuzt,

wobei hd und h entlang einer Geraden parallel zu dem geraden Segment gemessen werden, in dem orthogonal die betreffende Schneidkante auf die Ebene senkrecht auf die Achse (A) vom unteren Ende der Schneidspitze, an der die betreffende Schneidkante endet, projiziert ist.

5. Schneidplatte nach Anspruch 3 oder 4, bei der das folgende Verhältnis für eine der ersten und zweiten Schneidkanten zu beobachten ist:

$$hd \leq 0,95 \ x \ h$$

und vorzugsweise:

$$hd \leq 0,9 \ x \ h$$

wobei:

- hd die Höhe der betreffenden Schneidkante in orthogonaler Projektion auf eine Ebene senkrecht auf die Achse (A) ist,
- h die Höhe des Schnittpunktes (E) zwischen einerseits der fiktiven Geraden, umfassend das gerade Segment, in dem die betreffende Schneidkante auf die Ebene senkrecht auf die Achse (A) projiziert ist, und andererseits jener der halbierenden Ebenen ist, die mindestens eine zusätzliche Schneidkante angrenzend an die betreffende Schneidkante kreuzt,

wobei hd und h entlang einer Geraden parallel zu dem geraden Segment gemessen werden, in dem orthogonal die betreffende Schneidkante auf die Ebene senkrecht auf die Achse (A) vom unteren Ende der Schneidspitze, an der die betreffende Schneidkante endet, projiziert ist.

6. Schneidplatte nach einem der Ansprüche 3 bis 5, bei der das folgende Verhältnis für eine der ersten oder zweiten Schneidkanten zu beobachten ist:

$$P \geq 0,05 \ x \ h$$

wobei:

- p die maximale Tiefe der Verstärkung ist, die von mindestens einer zusätzlichen Schneidkante in orthogonaler Projektion auf eine Ebene senkrecht auf die Achse (A) definiert ist, gemessen orthogonal von einer fiktiven Geraden aus, umfassend das gerade Segment, in dem die betreffende Schneidkante orthogonal auf die Ebene senkrecht auf die Achse (A) projiziert ist, und
- h die Höhe des Schnittpunktes (E) zwischen einerseits der fiktiven Geraden, umfassend das gerade Segment, in dem die betreffende Schneidkante auf die Ebene senkrecht auf die Achse (A) projiziert ist, und andererseits jener der halbierenden Ebenen ist, die mindestens eine zusätzliche Schneidkante angrenzend an die betreffende Schneidkante kreuzt, wobei h entlang einer Geraden parallel zu dem geraden Segment gemessen wird, in dem die betreffende Schneidkante orthogonal auf die Ebene senkrecht auf die Achse (A) vom unteren Ende der Schneidspitze, an der die betreffende Schneidkante endet, projiziert ist.

7. Schneidplatte nach einem der Ansprüche 3 bis 6, bei der das folgende Verhältnis für eine der ersten oder zweiten Schneidkanten zu beobachten ist:

$$P \leq 0,2 \ x \ h$$

wobei:

- p die maximale Tiefe der Verstärkung ist, die von mindestens einer zusätzlichen Schneidkante in orthogonaler Projektion auf eine Ebene senkrecht auf die Achse (A) definiert ist, gemessen orthogonal von einer fiktiven Geraden aus, umfassend das gerade Segment, in dem die betreffende Schneidkante orthogonal auf die Ebene senkrecht auf die Achse (A) projiziert ist, und
- h die Höhe des Schnittpunktes (E) zwischen einerseits der fiktiven Geraden, umfassend das gerade Segment, in dem die betreffende Schneidkante auf die Ebene senkrecht auf die Achse (A) projiziert ist, und andererseits jener der halbierenden Ebenen ist, die mindestens eine zusätzliche Schneidkante angrenzend an die betreffende Schneidkante kreuzt, wobei h entlang einer Geraden parallel zu dem geraden Segment gemessen wird, in dem die betreffende Schneidkante orthogonal auf die Ebene senkrecht auf die Achse (A) vom unteren Ende der Schneidspitze, an der die betreffende Schneidkante endet, projiziert ist.

8. Schneidplatte nach einem der Ansprüche 1 bis 7, umfassend eine zweite Schneidplatte symmetrisch zur ersten Schneidplatte in Bezug zu einer Ebene senkrecht auf die Achse (A).

9. Schneidplatte, umfassend:

- eine Schneidfläche;
- eine Schneidspitze (401), die am Rand der Schneidfläche angeordnet ist;
- eine erste Schneidkante (402), die am Rand der Schneidfläche und einer ersten Freifläche angeordnet ist, wobei die erste Schneidkante an der Schneidspitze endet;
- eine zweite Schneidkante (404) und mindestens eine dritte Schneidkante (403);

bei der die Schneidspitze und die erste Schneidkante dazu geeignet sind, im Zusammenwirken ein Planfräsen-Plandrehen durchzuführen, wobei die Schneidspitze eine erste plane Fläche (301) durch Planfräsen und die erste Schneidkante eine zweite plane Fläche (302) durch Plandrehen erzeugt, wobei die zweite plane Fläche auf die erste plane Fläche senkrecht steht, **dadurch gekennzeichnet, dass** mindestens eine dritte Schneidkante und die zweite Schneidkante dazu geeignet sind, falls die Schnitttiefe die maximale Plandrehhöhe (Hd) der Schneidkante bei einem Planfräsen-Plandrehen, das durch Zusammenwirken der Schneidspitze und der ersten Schneidkante durgeführt wird, überschreitet, dass:

- mindestens eine dritte Schneidkante eine dritte Fläche (303) erzeugt, wobei die dritte Fläche an die zweite Fläche (302) angrenzt;

- die zweite Schneidkante eine vierte Fläche (304) erzeugt, wobei die vierte Fläche an die dritte Fläche angrenzt;

- die dritte Fläche (303) einen Vorsprung in Bezug zur zweiten und zur vierten Fläche (302, 304) bildet; und

- die Tangente an jedem Punkt eines Abschnitts des Profils der vierten Fläche (304) mit der zweiten planen Fläche (302) einen Winkel (ω') größer oder gleich 150°, vorzugsweise größer oder gleich 160°, bildet, wobei er kleiner als 180° ist, wobei der Winkel von der Außenseite der zweiten und vierten Fläche (302, 304) gemessen wird, wobei der Abschnitt der Teil der vierten Fläche (304) unter dem Niveau ist, das sich auf 0,4-mal der Höhe (Hd) der zweiten planen Fläche (302) befindet, wobei das Niveau parallel zum Profil der zweiten Fläche (302) von dem Niveau der Verbindung der dritten und vierten Fläche (303, 304) aus gemessen ist, wobei die Höhe (Hd) der zweiten planen Fläche (302) von der ersten planen Fläche (301) und der Verbindung der dritten und vierten Fläche (303, 304) aus gemessen wird, entsprechend dem Punkt des bearbeiteten Profils auf der der zweiten planen Fläche (302) in Bezug zu dem von der dritten Fläche gebildeten Vorsprung gegenüberliegenden Seite, von der aus die Tangente mit der zweiten planen Fläche (302) einen Winkel kleiner oder gleich 180° bildet, wobei er von der Außenseite zur zweiten Fläche gemessen wird.

10. Schneidplatte nach Anspruch 9, bei der:

- die zweite Schneidkante (404) am Rand der Schneidfläche und einer zweiten Freifläche angeordnet ist; und
- die erste Schneidkante (402) mit der zweiten Schneidkante mit Hilfe der mindestens einen dritten Schneidkante (403) verbunden ist, wobei die mindestens eine dritte Schneidkante am Rand der Schneidfläche und mindestens einer dritten Freifläche angeordnet ist, wobei die mindestens eine dritte Schneidkante und die mindestens eine dritte Freifläche eine Rille zwischen der ersten Freifläche und der zweiten Freifläche bilden.

11. Schneidplatte nach Anspruch 9 oder 10, bei der die Schneidspitze und die erste und die zweite Schneidkante sowie die mindestens eine dritte Schneidkante derart vorgesehen sind, dass, falls die Schnitttiefe die maximale Plandrehhöhe (Hd) der ersten Schneidkante bei einem Planfräsen-Plandrehen, das durch Zusammenwirken der Schneidspitze und der ersten Schneidkante durchgeführt wird, überschreitet, das folgende Verhältnis zu beobachten ist:

$$Hs \leq 0,6 \times Hd$$

und vorzugsweise:

$$Hs \leq 0,45 \times Hd$$

und ferner vorzugsweise:

$$Hs \leq 0,35 \times Hd$$

wobei:

- 'Hd' die Höhe der zweiten planen Fläche (302), gemessen von der ersten planen Fläche (301) aus, ist; und
- 'Hs' die Höhe der dritten vorspringenden Fläche ist, gemessen parallel zum Profil der zweiten Fläche (302) zwischen einerseits dem oberen Niveau der zweiten planen Fläche und andererseits dem Niveau der Verbindung der dritten und der vierten Fläche (303, 304).

12. Schneidplatte nach einem der Ansprüche 9 bis 11, bei der die Schneidspitze und die erste und die zweite Schneidkante sowie die mindestens eine dritte Schneidkante derart vorgesehen sind, dass, falls die Schnitttiefe die maximale Plandrehhöhe (Hd) der ersten Schneidkante bei einem Planfräsen-Plandrehen, das durch Zusammenwirken der Schneidspitze und der ersten Schneidkante durchgeführt wird, überschreitet, das folgende Verhältnis zu beobachten ist:

$$Hs \geq 0,1 \times Hd$$

und vorzugsweise:

$$Hs \leq 0,15 \times Hd$$

wobei:

- 'Hd' die Höhe der zweiten planen Fläche (302), gemessen von der ersten planen Fläche (301) aus, ist; und
- 'Hs' die Höhe der dritten vorspringenden Fläche ist, gemessen parallel zum Profil der zweiten Fläche (302) zwischen einerseits dem oberen Niveau der zweiten planen Fläche und andererseits dem Niveau der Verbindung der dritten und der vierten Fläche (303, 304).

13. Schneidplatte nach einem der Ansprüche 9 bis 12, bei der die Schneidspitze und die erste und die zweite Schneidkante sowie die mindestens eine dritte Schneidkante derart vorgesehen sind, dass, falls die Schnitttiefe die maximale Plandrehhöhe (Hd) der ersten Schneidkante bei einem Planfräsen-Plandrehen, das durch Zusammenwirken der Schneidspitze und der ersten Schneidkante durchgeführt wird, überschreitet, das folgende Verhältnis zu beobachten ist:

$$e \geq 0,2 \times Hs$$

wobei:

- 'Hs' die Höhe der dritten vorspringenden Fläche ist, gemessen parallel zum Profil der zweiten Fläche (302) zwischen einerseits dem oberen Niveau der zweiten planen Fläche und andererseits dem Niveau der Verbindung der dritten und der vierten Fläche (303, 304),
- 'e' die maximale Dicke des Profils der dritten Fläche ist, gemessen von der fiktiven Geraden (DF) aus, die einerseits durch den Verbindungspunkt der zweiten und dritten Flächen (302, 303) und andererseits den Verbindungspunkt der dritten und vierten Flächen (303, 304) verläuft.

14. Schneidplatte nach Anspruch 9, Schneidplatte nach einem der Ansprüche 9 bis 13, bei der die Schneidspitze und die erste und die zweite Schneidkante sowie die mindestens eine dritte Schneidkante derart vorgesehen sind, dass, falls die Schnitttiefe die maximale Plandrehhöhe (Hd) der ersten Schneidkante bei einem Planfräsen-Plandrehen, das durch Zusammenwirken der Schneidspitze und der ersten Schneidkante durchgeführt wird, überschreitet, das folgende Verhältnis zu beobachten ist:

$$e \leq Hs$$

wobei:

- 'Hs' die Höhe der dritten vorspringenden Fläche ist, gemessen parallel zum Profil der zweiten Fläche (302) zwischen einerseits dem oberen Niveau der zweiten planen Fläche und andererseits dem Niveau der Verbindung der dritten und der vierten Fläche (303, 304),
- 'e' die maximale Dicke des Profils der dritten Fläche ist, gemessen von der fiktiven Geraden (DF) aus, die einerseits durch den Verbindungspunkt der zweiten und dritten Flächen (302, 303) und andererseits den Verbindungspunkt der dritten und vierten Flächen (303, 304) verläuft.

15. Einheit, umfassend:

- einen Werkzeugträger (50); und
- mindestens eine Schneidplatte nach einem der Ansprüche 1 bis 14;
wobei der Werkzeugträger derart ausgeführt ist, dass auf diesem die Schneidplatte in einer Position montiert ist, die es ermöglicht, durch Planfräsen-Plandrehen zu bearbeiten.

**Claims**

1. A cutting insert (10), comprising:

- a cutting face (2);
- three cutting tips (3a, 3b, 3c) each arranged at the edge of the cutting face;
- three pairs of cutting edges (6b, 4a, 4b, 5a, 5b, 6a), each pair being formed by a first cutting edge and a second cutting edge terminating at a respective cutting tip ;

wherein:

- the first cutting edge (4a, 5a, 6a) of each of the three pairs is arranged at the edge of the corresponding cutting face and a first flank face (24a, 25a, 26a);
- the second cutting edge (4b, 5b, 6b) of each of the three pairs is arranged at the edge of the corresponding cutting face and a second flank face (24b, 25b, 26b);
- each cutting edge pair is obtained from each of the other cutting edge pairs by a 120° rotation about a common axis (A);
- the three cutting tips and the three pairs of cutting edges are symmetrical with respect to each of the bisecting planes (PI, P2, P3) of the three cutting tips; and

**characterized in that**

- the first cutting edge of each pair is connected to the second edge of another pair of cutting through at least one third cutting edge (4c, 5c, 6c), said at least one third cutting edge being arranged at the edge of a corresponding cutting face and at least one third flank face (24c, 25c, 26c), the at least one third cutting edge and the at least one corresponding third flank face forming a channel between the first flank face of the first cutting edge under consideration and the second flank face of the second cutting edge under consideration.

2. The cutting insert according to claim 1, wherein each of the cutting tips and any one of the first and second cutting edges terminating at the cutting tip under consideration, are adapted to perform, in cooperation, surface milling and facing, the tip performing the surface milling and the first or second cutting edge performing the facing.

3. The cutting insert according to claim 1 or 2, wherein the first and second cutting edges of each pair of cutting edges are projected orthogonally onto a plane perpendicular to said axis (A) at a respective linear segment.

4. The cutting insert according to claim 3, wherein the following ratio holds for either one of the first and second cutting edges:

$$hd \geq 0.6 \text{ x } h$$

and more preferably:

$$hd \geq 0.7 \text{ x } h$$

wherein:

- hd is the height of the cutting edge under consideration in orthogonal projection on a plane perpendicular to said axis (A),
- h is the height of the point of intersection (E) between, firstly, the imaginary straight line comprising the rectilinear segment in which the cutting edge under consideration is projected orthogonally onto the plane perpendicular to said axis (A) and, secondly, that one of the bisector planes which intersects the at least one additional cutting edge adjoining the cutting edge under consideration,

hd and h being measured along a line parallel to the rectilinear segment in which the cutting edge under consideration is projected orthogonally onto the plane perpendicular to said axis (A) from the lower end of the cutting tip at which the cutting edge under consideration terminates.

5. The cutting insert according to claim 3 or 4, wherein the following ratio holds for either one of the first and second cutting edges:

$$hd \leq 0.95 \text{ x } h$$

and more preferably:

$$hd \leq 0.9 \text{ x } h$$

wherein:

- hd is the height of the cutting edge under consideration in orthogonal projection on a plane perpendicular to said axis (A),
- h is the height of the point of intersection (E) between, firstly, the imaginary straight line comprising the rectilinear segment in which the cutting edge under consideration is projected orthogonally onto the plane perpendicular to said axis (A) and, secondly, that one of the bisector planes which intersects the at least one additional cutting edge adjoining the cutting edge under consideration,

hd and h being measured along a line parallel to the rectilinear segment in which the cutting edge under consideration is projected orthogonally onto the plane perpendicular to said axis (A) from the lower end of the cutting tip at which the cutting edge under consideration terminates.

6. The cutting insert according to any one of claims 3 to 5, wherein the following ratio holds for either of the first and second cutting edges:

$$p \geq 0.05 \text{ x } h$$

wherein:

- p is the maximum depth of the recess defined by the at least one additional cutting edge in orthogonal projection on a plane perpendicular to said axis (A), measured orthogonally from an imaginary straight line comprising the rectilinear segment in which the cutting edge under consideration onto the plane perpendicular to said axis (A) is projected orthogonally, and
- h is the height of the point of intersection (E) between, firstly, the imaginary straight line comprising the rectilinear segment in which the cutting edge under consideration is projected orthogonally onto the plane perpendicular to said axis (A), and, secondly, that one of the bisecting planes which intersects at least one additional cutting edge adjoining the cutting edge under consideration, h being measured along a straight line parallel to the rectilinear segment in which the cutting edge under consideration is projected orthogonally onto the plane perpendicular to said axis (A) from the lower end of the cutting tip at which the cutting edge under consideration terminates.

7. The cutting insert according to any one of claims 3 to 6, wherein the following ratio holds for either one of the first and second cutting edges:

$$p \leq 0.2 \text{ x h}$$

wherein:

- p is the maximum depth of the recess defined by the at least one additional cutting edge in orthogonal projection on a plane perpendicular to said axis (A), measured orthogonally from an imaginary straight line comprising the rectilinear segment in which the cutting edge under consideration is projected orthogonally onto the plane perpendicular to said axis (A), and
- h is the height of the point of intersection (E) between, firstly, the imaginary straight line comprising the rectilinear segment in which the cutting edge under consideration is projected orthogonally onto the plane perpendicular to said axis (A), and, secondly, that one of the bisecting planes which intersects at least one additional cutting edge contiguous to the cutting edge under consideration, h being measured along a straight line parallel to the rectilinear segment in which the cutting edge under consideration is projected orthogonally onto the plane perpendicular to said axis (A) from the lower end of the cutting tip at which the cutting edge under consideration terminates.

sideration terminates.

8. The cutting insert according to any one of claims 1 to 7, comprising a second cutting face symmetrical with the first cutting face with respect to a plane perpendicular to said axis (A).

9. A cutting insert, comprising:

- a cutting face;
- a cutting tip (401) located at the edge of the cutting face;
- a first cutting edge (402) arranged at the edge of the cutting face and a first flank face, the first cutting edge terminating at the cutting tip;
- a second cutting edge (404) and at least one third cutting edge (403);

wherein the cutting tip and the first cutting edge are adapted to perform, in cooperation, surface milling and facing, the cutting tip generating a first planar surface (301) by surface milling, and the first cutting edge generating a second planar surface (302) by facing, wherein the second surface is perpendicular to the first planar surface, and

**characterized in that** the at least one third cutting edge and the second cutting edge are adapted so that, in the case where the depth of cut exceeds the maximum height of facing (Hd) of the first cutting edge in a surface milling and facing operation performed by cooperation of the cutting tip and the first cutting edge:

- the at least one third cutting edge generates a third surface (303), the third surface being contiguous to the second surface (302);
- the second cutting edge creates a fourth surface (304), the fourth surface being contiguous to the third surface;
- the third surface (303) forms a projection with respect to the second and fourth surfaces (302, 304); and
- the tangent at any point of a portion of the profile of the fourth surface (304) forms with the second planar surface (302), an angle (ω') greater than or equal to 150°, more preferably greater than or equal to 160°, while being less than 180°, when measuring said angle on the outside of the second and fourth surfaces (302, 304), said portion being the portion of the fourth surface (304) located below the level at 0.4 times the height (Hd) of the second planar surface (302), said level being measured parallel to the profile of the second surface (302) from the level of junction of the third and fourth surfaces (303, 304), the height (Hd) of the second planar surface (302) being measured from the first planar surface (301) and the junction of the third and fourth surfaces (303, 304) corresponding to the point of the machined profile, on the side opposite the second planar surface (302) with respect to the projection formed by the third surface, starting from which the tangent forms with the second planar surface (302) an angle which is less than or equal to 180° when measuring it at the outer side of the second surface.

10. The cutting insert according to claim 9, wherein:

- the second cutting edge (404) is arranged at the edge of the cutting face and of a second flank face; and
- the first cutting edge (402) is connected to the second cutting edge through said at least one third cutting edge (403), said at least one third cutting edge being arranged at the edge of the cutting face and at least a third flank face, the at least one third cutting edge and the at least one third flank face forming a channel between the first flank face and the second flank face.

11. The cutting insert according to claim 9 or 10. wherein the cutting tip and the first and second cutting edges, and the at least one third cutting edge are adapted to that in the case where the depth of cut exceed the maximum height of facing (Hd) of the first cutting edge during surface milling and facing performed by cooperation of the cutting tip and the first cutting edge, the following relation holds:

$$Hs \leq 0.6 \times Hd$$

and more preferably:

$$Hs \leq 0.45 \times Hd$$

and more preferably:

$$Hs \leq 0.35 \times Hd$$

wherein:

- "Hd" is the height of the second planar surface (302) measured from the first planar surface (301); and
- 'Hs' is the height of the third projecting surface, measured parallel to the profile of the second surface (302), between, firstly, the upper level of the second planar surface and, secondly, the level of junction of the third and fourth surfaces (303, 304).

12. The cutting insert according to any one of claims 9 to 11, wherein the cutting tip and the first and second cutting edges, and the at least one third cutting edge are adapted to that in the case where the depth of cut exceeds the maximum height of facing (Hd) of the first cutting edge during surface milling and facing performed by cooperation of the cutting tip and the first cutting edge, the following relation holds:

$$Hs \geq 0.1 \times Hd$$

and more preferably:

$$Hs \leq 0.15 \times Hd$$

wherein:

- "Hd" is the height of the second planar surface (302) measured from the first planar surface (301); and
- 'Hs' is the height of the third projecting surface, measured parallel to the profile of the second surface (302), between, firstly, the upper level of the second planar surface and, secondly, the level of junction of the third and fourth surfaces (303, 304).

13. The cutting insert according to any one of claims 9 to 12, wherein the cutting tip and the first and second cutting edges, and the at least one third cutting edge are adapted to that in the case where the depth of cut exceeds the maximum height of facing (Hd) of the first cutting edge during surface milling and facing performed by cooperation of the cutting tip and the first cutting edge, the following relation holds:

$$e \geq 0.2 \times Hs$$

wherein:

- 'Hs' is the height of the third projecting surface, measured parallel to the profile of the second surface (302), between, firstly, the upper level of the second planar surface and, secondly, the level of the junction of the third and fourth surfaces (303, 304).
- 'e' is the maximum thickness of the profile of the third surface, measured from the imaginary straight line (DF) passing through, firstly, the point of junction of the second and third surfaces (302, 303) and, secondly, the point of junction of the third and fourth surfaces (303, 304).

14. The cutting insert according to claim 9, the cutting insert according to any one of claims 9 to 13, wherein the cutting tip and the first and second cutting edges, and the at least one third cutting edge are adapted so that, where the depth of cut exceeds the maximum height of facing (Hd) of the first cutting edge during a surface milling and facing operation performed by cooperation of the cutting tip and the first cutting edge, the following relation holds:

$$e \leq Hs$$

wherein:

- 'Hs' is the height of the third projecting surface, measured parallel to the profile of the second surface (302), between, firstly, the upper level of the second planar surface and, secondly, the level of junction of the third and fourth surfaces (303, 304),
- 'e' is the maximum thickness of the profile of the third surface, measured from the imaginary straight line (DF) passing through, firstly, the point of junction of the second and third surfaces (302, 303) and, secondly, the point of junction of the third and fourth surfaces (303, 304).

15. An assembly comprising:

- a tool holder (50); and
- at least one cutting insert according to any one of claims 1 to 14;
wherein the tool holder is adapted for mounting the cutting insert in a position for machining by surface milling and facing.

**Fig. 1**

**Fig. 2**

**Fig. 3**

**Fig. 4**

**Fig. 5**

**Fig. 6**

P_S

10

5a

5c

5b

3c

3b

13b

24b

4b

14b

12

14c

4c

24c

24a

6a

4a

6c

2

14a

A

6b

13a

3a

**Fig. 7**

50

10

3b

2

60

4b

24b

4c

24c

4a

24a

10

6b

26b

3a

10

**Fig. 8**

**Fig. 9**

**Fig. 10**

304

303f  D  T
303e
303d
303  303b
303c  303a
C

302

$H_p$
$H_s$
$H_d$

303g

**Fig. 11**

304

T
θ  D

303g  302

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1736266 B1

- EP 2070620 A1